# EUROPÄISCHE PATENTSCHRIFT

(11) **EP 0 967 230 B1**
(45) Veröffentlichungstag und Bekanntmachung des Hinweises auf die Patenterteilung: **02.01.2003**
(21) Anmeldenummer: 99111386.1
(22) Anmeldetag: 11.06.1999
(51) Int. Cl.: C08F 4/68, C08F 10/00

(54) **Katalysatorsystem zur Herstellung von Olefin(co)polymerisaten**
Catalyst system for the preparation of olefin (co)polymers
Système catalytique pour la préparation de (co)polymères d'oléfines

(30) Priorität: 24.06.1998 DE 19828107
(43) Veröffentlichungstag der Anmeldung: 29.12.1999
(73) Patentinhaber: Bayer Aktiengesellschaft, 51368 Leverkusen (DE)
(72) Erfinder: Hoch, Martin, Dr., 42657 Solingen (DE); Jansen, Johannes-Rudolf, Dr., 40789 Monheim (DE); Essert, Thomas, Dr., 51491 Overath (DE); Sattler, Andreas, Dr., 40229 Düsseldorf (DE); Schneider, Jürgen Dr., 50668 Köln (DE)

(56) Entgegenhaltungen:
- EP-A- 0 044 119
- EP-A- 0 346 098
- US-A- 3 380 981

## Beschreibung

Die vorliegende Erfindung betrifft ein Katalysatorsystem, enthaltend
a) eine aluminiumorganische Verbindung
b) eine Vanadium-Verbindung
c) einen Reaktivator im Molverhältnis 0,5 bis 100 bezogen auf die Verbindung b)
dadurch gekennzeichnet, daß als Reaktivator ein Mono- oder Dihalogencarbonsäurealkylester der folgenden Formel: 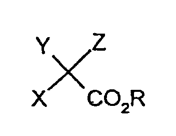 eingesetzt wird, wobei X eine C₁₋₆-Alkyl- oder C₁₋₆-Alkoxygruppe ist, Y Cl, Br oder H ist, Z Cl oder Br ist und R eine C₁₋₆-Alkylgruppe ist und dessen Verwendung im Verfahren zur Herstellung von (Co)polymerisaten aus einem oder mehreren α-Olefinen und gegebenenfalls einem Dien mit nichtkonjugierten Doppelbindungen oder einem konjugierten Dien durch (Co)polymerisation, sowie die mit dem erfindungsgemäßen Katalysator herstellbaren Polymerisate.

Die Polymerisation von Ethylen mit anderen α-Olefinen und gegebenenfalls mit nicht konjugierten Dienen oder von Olefinen oder konjugierten Dienen allein in Gegenwart von metallorganischen (Ziegler-Natta)-Mischkatalysatoren ist bekannt (Encycl. Polym. Sci. Eng. 2nd Ed. Vol. 6, S. 522ff Wiley, New York, 1986). Die Polymerisation wird in Lösung, als Suspension oder in der Gasphase durchgeführt.

Als Katalysatoren werden Übergangsmetallverbindungen der Nebengruppen IV bis VI des Periodensystems (meistens Vanadiumverbindungen in der Wertigkeitsstufe +3 bis +5) gemeinsam mit metallorganischen Verbindungen der Hauptgruppen I bis III (meistens aluminiumorganische Verbindungen) eingesetzt. Solche katalytischen Systeme zeigen eine sehr hohe Anfangsaktivität, die jedoch aufgrund der schnellen Reduktion des Übergangsmetalls zu niedrigen, polymerisationsinaktiven Wertigkeitsstufen (z.B. +2) rasch abnimmt. Zur Erhöhung der Polymerausbeuten (z.B. ausgedrückt als gebildete Polymermenge in g/g Übergangsmetall) werden daher Reaktivatoren eingesetzt, die die Übergangsmetallverbindung auf polymerisationsaktive Wertigkeitsstufen zurückoxidieren. US-B- 3,380,981 offenbart eine Kombination aus Titanverbindungen und Reaktivatoren mit Carbonyl-Funktionen.

Die effizientesten Reaktivatoren für vanadiumhaltige Katalysatoren sind chlorhaltige Substanzen. In der Praxis haben sich polychlorierte Verbindungen wie z.B. Trichloressigsäureester (DE 15 70 726), Perchlorcrotonsäureester (DE 15 95 442) oder Hexachlorcyclopentadien (DE 14 95 698) bewährt. Diese Reaktivatoren haben allerdings den Nachteil, daß die resultierenden Copolymere einen sehr hohen Chlorgehalt aufweisen. Manche Polymereigenschaften, in erster Linie die Alterungsbeständigkeit, werden vom Chlorgehalt negativ beeinflußt. Zudem führen chlorhaltige Polymere zu verstärkter Korrosion an den Anlagenteilen bei der Aufarbeitung des Copolymerisats nach der Polymerisation und an den Verarbeitungsanlagen. Chlorärmere Verbindungen, z.B. Mono- und Dichlormalonsäureester (CA 1272857, DE 23 44 267) weisen meistens eine niedrige Aktivität auf. Dies führt in der Praxis zu einem niedrigen Feststoffgehalt in der Polymerlösung. Um diesen Mangel zu beseitigen, wären unverhältnismäßig große Überschüsse an Reaktivator bezogen auf die Vanadiumverbindung notwendig, was wirtschaftlich nachteilig ist. In den letzten Jahren wurden chlorärmere, wirksame Verbindungen als Reaktivatoren beschrieben, z.B. Dichlorphenylessigsäureester (EP 0 044 119 und 0 044 595). Allerdings kann auch bei solchen Reaktivatoren die Chlorkonzentration im Polymer nur über teure Polymerwäschen auf das notwendige niedrige Niveau gesenkt werden.

EP 0 680 976 offenbart die Verwendung von Aryl-Halogenmalonestern als Reaktivatoren für vanadiumhaltige Ziegler-Natta-Katalysatoren. Diese sind zwar wirksam, jedoch ist im Vergleich zu Dichlorphenylessigsäureethylester die doppelte Menge an Reaktivatoren zur Erzielung zufriedenstellender Ausbeuten erforderlich.

Der vorliegenden Erfindung liegt daher die Aufgabe zugrunde, ein Katalysatorsystem für die (Co)polymerisation von mindestens einem Olefin und gegebenenfalls einem Dien mit nichtkonjugierten Doppelbindungen oder einem konjugierten Dien bereitzustellen, welches einen Reaktivator umfaßt, der die Nachteile des Standes der Technik nicht aufweist.

Diese Aufgabe wird erfindungsgemäß gelöst durch die Bereitstellung eines Katalysatorsystems enthaltend
a) eine aluminiumorganische Verbindung,
b) eine Vanadiumverbindung,
c) einen Reaktivator im Molverhältnis 0,5 bis 100 bezogen auf die Verbindung b),
wobei als Reaktivator ein Mono- oder Dihalogencarbonsäurealkylester der folgenden Formel: 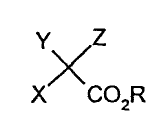 eingesetzt wird, in der X eine C₁₋₆Alkyl- oder C₁₋₆-Alkoxygruppe, Y Cl, Br oder H, Z Cl oder Br und R eine C₁₋₆-Alkylgruppe bedeutet.

Die Gruppe R kann eine geradkettige oder verzweigte oder cyclische Alkylgruppe mit 1 bis 6 Kohlenstoffatomen sein, z.B. Methyl, Ethyl, n-Propyl, i-Propyl, n-Butyl, sec-Butyl, i-Butyl, tert-Butyl, n-Pentyl, i-Pentyl, n-Hexyl, Cyclopropyl oder Cyclohexyl.

Der Rest Z kann Cl oder Br sein. Bevorzugt ist Cl.

Der Rest Y kann H, Cl oder Br sein. Falls Y Cl oder Br ist, ist Y = Z. Bevorzugt ist Y Cl, da die Dichlorcarbonsäurealkylester im Vergleich zu Monochlorcarbonsäurealkylestern oder Mono- oder Dibromcarbonsäurealkylestern eine höhere Aktivität aufweisen bzw. preisgünstiger sind.

Das Reaktivator/Übergangsmetall-Molverhältnis liegt zwischen 0,5 und 100, vorzugsweise zwischen 1 und 40.

Als metallorganische Verbindung a) des Katalysatorsystems können bevorzugt Verbindungen der allgemeinen Formel

X_{Y}AlR_{3-Y}

eingesetzt werden, wobei X Halogen ist und R 1-6-Alkyl ist und y 0,1 oder 2 ist. Als Alkylgruppe kommt z.B. Methyl, Ethyl, n-Propyl, i-Propyl, n-Butyl, i-Butyl, sec-Butyl, tert-Butyl, n-Pentyl oder n-Hexyl in Frage. Beispielhafte Verbindungen sind Ethylaluminiumsesquichlorid, Ethylaluminiumdichlorid, Diethylaluminiumchlorid, Diisobutylaluminiumchlorid. Die Verbindungen können allein oder als Gemisch eingesetzt werden.

Bei der Vanadiumverbindung b) handelt sich bevorzugt um Verbindungen der allgemeinen Formel

X_{y}MR_{3-y}

wobei M V oder VO bedeutet, X Halogen bedeutet, R eine Acetylacetonatgruppe oder eine C₁₋₆-Alkoxygruppe bedeutet und y 1, 2 oder 3 ist Als Alkoxygruppe kommen geradkettige oder verzweigte Alkoxygruppen in Frage wie z.B. Methoxy, Ethoxy, n-Propoxy, i-Propoxy, n-Butoxy, i-Butoxy, sec-Butoxy, tert-Butoxy, n-Pentyloxy oder n-Hexyloxy.

Es können z.B. VCl₃, VOCl₃, Vanadiumtrisacetylacetonat, Vanadylbisacetylacetonat, Alkylvanadate mit 1 bis 6 Kohlenstoffatomen usw. eingesetzt werden. Die Verbindungen können allein oder als Gemisch eingesetzt werden.

Weiterhin bevorzugt werden Verbindungen mit Vanadium in der Oxidationsstufe +4 eingesetzt, ganz besonders bevorzugt VCl₄.

Das Molverhältnis metallorganische Verbindung/Übergangsmetallverbindung liegt zwischen 1 und 100, bevorzugt zwischen 2 und 50.

Die mit dem erfindungsgemäßen Katalysatorsystem polymerisierbaren Olefine sind bevorzugt Ethylen oder α-Olefine mit 3 bis 10 Kohlenstoffatomen, beispielsweise Propylen, 1-Butylen, Isobutylen, lsopren, 1-Penten, 1-Hexen,1-Octen oder 1-Decen. Vorzugsweise wird Ethylen, Propylen, Isopren und Isobutylen verwendet. Falls Copolymerisate aus Ethylen, einem weiteren α-Olefin und ggf. einem Dien hergestellt werden, so wird bevorzugt Propylen als zweites Olefin eingesetzt (EPDM-Kautschuk). Der Ethylengehalt im Copolymer liegt in diesem Fall bevorzugt zwischen 25 und 85 Gew.-%, für kautschukartige Copolymere vorzugsweise zwischen 40 und 75 Gew.-%, jeweils bezogen auf das Copolymer.

Zur Vulkanisation sind bei den meisten Copolymerisaten ungesättigte Seitenketten erforderlich. Zu diesem Zweck wird als drittes Monomer ein nichtkonjugiertes Dien, bevorzugt 5-Ethyliden-2-norbomen, Dicyclopentadien oder 1,4-Hexadien eingesetzt. Die Konzentration des Termonomers im Copolymer beträgt 1 bis 15 Gew.-%, vorzugsweise 1 bis 10 Gew.-%, bezogen auf das Copolymer.

Ebenfalls bevorzugt kann mit dem Katalysatorsystem Isobutylen mit Isopren zur Herstellung von Butylkautschuk polymerisiert werden. Der Anteil an lsopren im Copolymer beträgt, bevorzugt 0,5 bis 5 Gew.-%.

Eine weitere bevorzugte Anwendung des erfindungsgemäßen Katalysatorsystems ist die Polymerisation von Butadien zur Herstellung von Polybutadien. Zur Steuerung des Molekulargewichts können Kettenüberträger wie z.B. Wasserstoff, Ammoniak, Amine, Dialkylzink, Alkylhalogenide, Acetylenkohlenwasserstoffe usw. eingesetzt werden.

Die (Co)polymerisationsreaktion wird in Lösung, als Suspension oder in der Gasphase durchgeführt. Die Verfahren sind dem Fachmann geläufig, Einzelheiten können z.B. Ullmann, Enzyklopädie der Technischen Chemie Vol. A23, S. 290 ff, Vol. A21, S. 359,Vol 18, S. 740 und Bd. 13, S.601 entnommen werden.

Die Lösungs(co)polymerisation erfolgt in inerten Lösungsmitteln wie Alkanen (Butan, Pentan, Hexan, C6-Schnitte, Heptan usw.) oder Aromaten (Benzol, Toluol) oder auch im flüssigen Olefin bei Temperaturen zwischen -90°C und 100°C, bevorzugt zwischen 20°C und 80°C.

Bei der Suspensions(co)polymersation wird bevorzugt ohne Lösungsmittel gearbeitet, wobei überschüssiges Monomeres, im Fall von EPDM Propylen, als Reaktionsmedium dient, welches auch in überkritischer Form vorliegen kann. Es besteht auch die Möglichkeit, bei sehr niedriger Temperatur, z.B. bis zu -100°C, in einem halogenierten Kohlenwasserstoff, z.B. Dichlormethan oder Chlormethan, als Lösungsmittel zu arbeiten.

Die Gasphasenpolymerisation erfolgt bevorzugt mit geträgerten Vanadiumkatalysatoren oder Präpolymerisaten. Unabhängig von der konkreten Ausführungsform der Gasphasenpolymerisation dient der hier beanspruchte Reaktivator zur Erhöhung der Polymerisationsaktivität.

Die unter Verwendung des erfindungsgemäßen Katalysatorsystems erhaltenen (Co)-polymerisate zeichnen sich durch einen sehr niedrigen Halogengehalt aus, da die aus dem erfindungsgemäßen Reaktivator bei der Hydrolyse im Stripper im Anschluß an die Polymerisation gebildete organische Verbindung kein Chlor enthält, sondern das Chlor in Form von HCl abgespalten wird. Sowohl HCl als auch die organische Verbindung lassen sich durch Waschen des Polymerisats leicht entfernen oder können auch im Polymerisat verbleiben.

Die folgenden Beispiele und Vergleichsbeispiele erläutern die Erfindung näher.

Die erfindungsgemäßen Reaktivatoren lassen sich entsprechend den folgenden Beispielen herstellen:

### Beispiel 1 Herstellung von Methoxy-dichloressigsäuremethylester

100,0 g (0,847 mol) Oxalsäuredimethylester und 176,6 g (0,847 mol) Phosphorpentachlorid werden in einem 11-Rundkolben für 18 h unter Rühren mit einem 130-135°C heißem Ölbad erhitzt.

Die so erhaltene, fast farblose Lösung wird bei ca. 10 mbar über eine min. 30 cm lange Spiegelkolonne fraktioniert destilliert. Die Fraktionen um und über 60°C werden mit Protonen-NMR und GC-MS auf Produktgehalt hin untersucht.

Typischerweise erhält man nach erneuter fraktionierter Destillation Ausbeuten von 30-50 % mit einem Gehalt > 90 % (GC-MS: M-Cl, Protonen-NMR:DMSO-d6:3.83 ppm, s, 6H).

### Beispiel 2.1 Herstellung von 2-Oxopropansäure-2-butylester

130 g (2 mol) 2-Oxopropansäure werden zusammen mit 200 g (2,7 mol) 2-Butanol und 7,5 g (40mmol) 4-Toluolsulfonsäure mit 150ml Toluol verdünnt und zum Sieden erhitzt. Die Apparatur ist mit einem Rückflußkühler und einem Wasserabscheider ausgerüstet. Die Mischung wird so lange unter Rückfluß gekocht, bis sich kein Wasser mehr abscheidet.

Anschließend werden 300ml Wasser zugegeben und 3-mal mit je 100 ml Diethylether extrahiert. Die vereinigten organischen Phasen werden mit wasserfreiem Natriumsulfat getrocknet und der Ether am Rotationsverdampfer abgezogen. Der Rückstand wird unter vermindertem Druck destilliert und 210 g Produkt erhalten. Die Reinheit des Esters betrug >98 % (durch GC ermittelt).

### Beispiel 2.2 Herstellung von 2,2-Dichloropropansäure-2-butylester

104,0 g (0,72 mol) 2-Oxopropansäure-2-butylester aus Beispiel 2.1 werden mit 50 ml trockenem Tetrachlorkohlenstoff verdünnt und zu einer siedenden Mischung aus 260,3 g (1,25 mol) PCl₅ in 300 ml trockenem Tetrachlorkohlenstoff langsam unter Rühren zugetropft. Anschließend wird für weitere 4 Stunden am Rückfluß erhitzt. Dann wird nach Austausch des Rückflußkühlers durch eine Destillationsbrücke fraktioniert unter vermindertem Druck destilliert. Hierbei werden zunächst bei 40°C und 150 mbar die niedrigsiedenden Komponenten abdestilliert. Das wird die restliche Reaktionsmischung in eine kleinere Destillationsapparatur überführt und fraktioniert destilliert. Das gewünschte Produkt wurde in einer Menge von 130 g (= 90 % Ausbeute) erhalten. Durch GC-MS wurden noch geringe Restgehalte von 2-Oxopropansäure-2-butylester und 2-Chloracrylsäure-2-butylester gefunden. Auf eine weitere Aufarbeitung wurde verzichtet.

### Beispiel 2.3 Synthese von 2,2-Dichlor-propionsäure-2-ethylester

424,8 g (2,04 mol) Phosphorpentachlorid werden in 500 ml trockenem Tetrachlorkohlenstoff vorgelegt und das Gemisch unter Rühren zum Sieden gebracht und zur siedenden Mischung langsam 232,3 g (2,00 mol) 2-Oxopropansäureethyleter in 200 ml CCl₄ getropft. Nach beendeter Zugabe wird das Gemisch für weitere 3 Stunden am Rückfluß erhitzt. Anschließend wird nach Austausch des Rückflußkühlers durch eine Destillationsbrücke das Lösungsmittel unter vermindertem Druck abdestilliert. Der Rückstand wird in Eiswasser gegeben und das Gemisch dreimal mit Diethylether extrahiert. Die vereinigten organischen Phasen werden mit einer wäßrigen 2 %igen NaHCO₃-Lösung und dreimal mit Wasser gewaschen. Nach dem Trocknen der organischen Phase über Magnesiumsulfat wird das Lösungsmittel unter vermindertem Druck abdestilliert. Es wurden 279,8 g (= 82 % Ausbeute) erhalten. Durch NMR-Spektroskopie wurde gefunden, daß das isolierte Produkt 75 % 2,2-Dichlorpropansäureethylester und 25 % 2-Chloracrylsäureethylester enthält. Auf eine weitere Aufarbeitung wurde verzichtet und das Produkt direkt in Polymerisationsbeispiel 3 eingesetzt.

### Polymerisationsbeispiel 1 (Vergleich)

In einen Glasreaktor mit 2-1-Nennvolumen wurden folgende Ströme dosiert:
1 833 g/h Hexan (Exxsol DHN50 der Fa. Exxon, getrocknet durch Azeotropdestillation), 100 g/h Ethylen, 370 g/h Propylen und 10 g/h ENB. Der Füllstand im Reaktor wurde auf 21 gestellt. Der Druck im Reaktor betrug 7 bar und wurde über ein Entlastungsventil über der Gasphase des Reaktors sowie über die kontinuierliche Produktabnahme in einen Entspannbehälter kontrolliert. Die Temperatur wurde auf 57°C gehalten, wobei die Kühlung über einen Mantel erfolgte. Die Katalysatorkomponenten wurde in Form von hexanischen Lösungen dosiert, die Menge Hexan aus den Katalysatorströmen ist in der obengenannten Angabe berücksichtigt:
   0,035 g/h (0,2 mmol/h) VOCl₃
   0,995 g/h (8,0 mmol/h) EASC
   0,352 g/h (1,5 mmol/h) DCPAE
4 Stunden nach Beginn des Versuches wurde die Polymerlösung für eine Stunde gesammelt, mit Methanol abgestoppt und das Polymer durch Strippen mit Wasserdampf erhalten. Es wurden 79 g Produkt erhalten. Es wurde ein Mooneywert von 79 ME (ML 1+4, 125°C) gemessen. Die Zusammensetzung war 45,3 Gew.-% Propylen, 45,7 Gew.-% Ethylen und 9,0 Gew.-% ENB.

### Polymerisationsbeispiel 2 (Vergleich)

Es wurde wie in Polymerisationsbeispiel 1 verfahren, jedoch wurde anstelle von DCPAE 0,161 g/h Nitropropan (1,8 mmol/h) eingesetzt.
Es wurde nur eine maximale Konzentration von 2,5 % erhalten, was einer Produktion von 47 g Polymer entsprachen. Da das Auftreten von weißen Fäden im Reaktor auf Anteile von Polyethylen deutete, wurde auf eine weitere Aufarbeitung verzichtet.

### Polymerisationsbeispiel 3 (erfindungsgemäß)

Es wurde wie in Polymerisationsbeispiel 1 verfahren, jedoch wurde anstelle von DCPAE 0,327 g/h (1,9 mmol/h) Methoxy-dichloressigsäuremethylester aus Beispiel 1 eingesetzt. Es wurden in einer Stunde 88 g Polymer erhalten mit der Zusammensetzung 41,3 Gew.-% Propylen, 58,7 Gew.-% Ethylen und 5,8 Gew.-% ENB und dem Mooneywert von 78,2. Das beim Strippen aufgefangene Lösungsmittel wurde durch GC untersucht. Es wurde kein Methoxy-dichloressigsäuremethylester mehr gefunden.

Offensichtlich hydrolysiert der Reaktivator unter den Bedingungen des Strippers vollständig u.a. zu Brenztraubensäure. Dadurch ergibt sich der Vorteil, daß der durch den Reaktivator bedingte Chlorgehalt im Polymeren in diesem Fall wesentlich geringer ist.

### Polymerisationsbeispiel 4 (erfindungsgemäß)

In einem Glasreaktor mit 2-1-Nennvolumen wurden folgende Ströme batch-weise eindosiert.

1,2 1 Hexan (Exxsol DHN 50 getrocknet), 100 g Ethylen und 370 g Propylen wurden vorgelegt und die Temperatur auf 45°C eingestellt. Der Druck betrug 6 bar, die Monomere werden gemäß ihrem Verbrauch nachdosiert.

Folgende Katalysatorkomponenten werden in Form von hexanischen Lösungen zudosiert, die hiermit verbundene Hexanzugabe ist in den 1,2 1 bereits enthalten.
0,06 mmol VOCl₃
1,7 mmol EASC
0,04 mmol des Produktes aus Beispiel 2.3
1 h später wurde die Polymerisation durch Zugabe von Wasser gestoppt, das Polymere mit 0,3 Gew.-% Irganox®1076 (Bayer AG) stabilisiert, mit Ethanol gefällt und im Vakuumofen getrocknet.

Man erhielt 40 g EPM mit 64,7 Gew.-% Ethylen- und 35,3 Gew.-% Propylenanteil.

### Polymerisationsbeispiel 5 (Vergleich)

Es wurde analog Polymerisationsbeispiel 4 verfahren, jedoch statt 0,04 mmol des Produktes aus Beispiel 2.3 wurden 0,04 mmol DCPAE eingesetzt. Die Temperatur betrug 44°C. Man erhielt 20 g EPM mit 62,2 Gew.-% Ethylen- und 37,8 Gew.-% Propylenanteil.

Ein Vergleich von Polymerisationsbeispiel 4 und 5 belegt die höhere Produktivität des erfindungsgemäßen Reaktivators verglichen mit DCPAE.

## Patentansprüche

1. Katalysatorsystem, enthaltend
a) eine aluminiumorganische Verbindung,
b) eine Varadiumverbindung,
c) einen Reaktivator im Molverhältnis 0,5 bis 100 bezogen auf die Verbindung b),
**dadurch gekennzeichnet, daß** als Reaktivator ein Mono- oder Dihalogencarbonsäurealkylester der folgenden Formel: 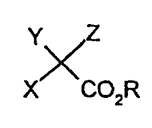 eingesetzt wird, wobei X eine C₁₋₆-Alkyl- oder C₁₋₆-Alkoxygruppe ist, Y Cl, Br oder H ist, Z Cl oder Br ist und R eine C₁₋₆-Alkylgruppe ist.

2. Katalysatorsystem nach Anspruch 1, **dadurch gekennzeichnet, daß** als Reaktivator 2,2-Dichlorpropionsäure-n-propylester oder 2-Methoxy-2,2-dichloressigsäuremethylester eingesetzt wird und daß als Verbindung b) eine Verbindung von Vanadium in den Wertigkeitsstufen +3 bis +5 eingesetzt wird.

3. Katalysatorsystem nach Anspruch 1, **dadurch gekennzeichnet, daß** die aluminiumorganische Verbindung a) eine Verbindung der folgenden allgemeinen Formel ist:
X_{Y}AlR_{3-Y}
wobei X Halogen ist und R C₁₋₆-Alkyl ist und y 0, 1 oder 2 ist.

4. Katalysatorsystem nach Anspruch 1, **dadurch gekennzeichnet, daß** als Vanadiumverbindung b) eine Verbindung der allgemeinen Formel
X_{Y}MR_{3-Y}
eingesetzt wird, wobei M V oder VO bedeutet, X Halogen bedeutet, R eine Acetylacetonatgruppe oder eine C₁₋₆-Alkoxygruppe bedeutet und y 1, 2 oder 3 ist.

5. Verwendung eines Katalysatorsystems gemäß Anspruch 1 in einem Verfahren zur Herstellung von (Co)polymerisaten aus einem oder mehreren α-Olefinen und gegebenenfalls einem Dien mit nichtkonjugierten Doppelbindungen oder einem konjugierten Dien durch (Co)polymerisation.

6. Verwendung nach Anspruch 5, **dadurch gekennzeichnet, daß** als Copolymerisate Copolymerisate aus Ethylen, mindestens einem weiteren α-Olefin und gegebenenfalls einem Dien mit nichtkonjugierten Doppelbindungen oder Polymerisate aus einem konjugierten Dien hergestellt werden.

7. Verwendung nach Anspruch 6, **dadurch gekennzeichnet, daß** Ethylen-Propylen-Dien-Kautschuke, Polybutadien oder Butylkautschuk hergestellt wird.

## Claims

1. Catalyst system containing
a) an organoaluminium compound,
b) a vanadium compound,
c) a reactivator in a molar ratio of from 0.5 to 100, based on compound b),
**characterised in that** there is used as the reactivator a mono- or di-halocarboxylic acid alkyl ester of the following formula: 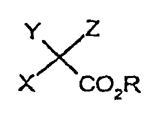 wherein X is a C₁₋₆-alkyl or C₁₋₆-alkoxy group, Y is Cl, Br or H, Z is Cl or Br, and R is a C₁₋₆-alkyl group.

2. Catalyst system according to claim 1, **characterised in that** 2,2-dichloropropionic acid n-propyl ester or 2-methoxy-2,2-dichloroacetic acid methyl ester is used as the reactivator, and a compound of vanadium in the valence stages from +3 to +5 is used as the compound b).

3. Catalyst system according to claim 1, **characterised in that** the organoaluminium compound a) is a compound of the following formula:
X_{Y}AlR_{3-Y}
wherein X is halogen and R is C₁₋₆-alkyl and y is 0, 1 or 2.

4. Catalyst system according to claim 1, **characterised in that** there is used as the vanadium compound b) a compound of the general formula
X_{Y}MR_{3-Y}
wherein M represents V or VO, X represents halogen, R represents an acetylacetonate group or a C₁₋₆-alkoxy group and y is 1, 2 or 3.

5. Use of a catalyst system according to claim 1 in a process for the preparation of (co)polymers of one or more α-olefins and, optionally, a diene having non-conjugated double bonds or a conjugated diene by (co)polymerisation.

6. Use according to claim 5, **characterised in that** there are prepared as copolymers copolymers of ethylene, at least one further α-olefin and, optionally, a diene having non-conjugated double bonds, or polymers of a conjugated diene.

7. Use according to claim 6, **characterised in that** ethylene-propylene-diene rubbers, polybutadiene or butyl rubber are prepared.

## Revendications

1. Système de catalyseur contenant
a) un composé organique de l'aluminium,
b) un composé du vanadium,
c) un réactivateur dans un rapport molaire de 0,5 à 100 rapporté au composé b)
**caractérisé en ce que** l'on utilise comme réactivateur un ester alkylique d'acide mono- ou di-halogénocarboxylique de la formule suivante: 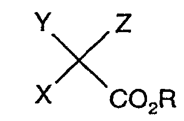 X étant un groupe alkyle en C₁-C₆ ou un groupe alcoxy en C₁-C₆, Y étant Cl, Br ou H, Z étant Cl ou Br et R étant un groupe alkyle en C₁-C₆.

2. Système de catalyseur selon la revendication 1, **caractérisé en ce que** l'on utilise comme réactivateur de l'ester n-propylique d'acide 2,2-dichloropropionique ou de l'ester méthylique d'acide 2-méthoxy-2,2-dichloroacétique et **en ce que** l'on utilise comme composé b) un composé du vanadium au niveau de valence +3 à +5.

3. Système de catalyseur selon la revendication 1, **caractérisé en ce que** le composé organique de l'aluminium a) est un composé de la formule générale suivante :
X_{y}AlR_{3-y}
X étant un atome d'halogène et R étant un groupe alkyle en C₁-C₆ et y étant égal à 0, 1 ou 2.

4. Système de catalyseur selon la revendication 1, **caractérisé en ce que** l'on utilise comme composé du vanadium b) un composé de formule générale
X_{y}MR_{3-y}
M étant V ou VO, X étant un atome d'halogène, R étant un groupe acétylacétonate ou un groupe alcoxy en C₁-C₆ et y étant égal à 1, 2 ou 3.

5. Utilisation d'un système de catalyseur selon la revendication 1 dans un procédé pour la préparation de (co)polymères à partir d'une ou plusieurs oléfines α et éventuellement d'un diène avec des doubles liaisons non conjuguées ou avec un diène conjugué par (co)polymérisation.

6. Utilisation selon la revendication 5, **caractérisée en ce que** l'on prépare comme copolymères des copolymères d'éthylène, d'au moins une autre oléfine α et éventuellement d'un diène avec des doubles liaisons non conjuguées ou des polymères à partir d'un diène conjugué.

7. Utilisation selon la revendication 6, **caractérisée en ce que** l'on prépare des caoutchoucs d'éthylène-propylène-diène, du polybutadiène ou un caoutchouc butylique.
